# FASCICULE DE BREVET EUROPEEN

(11) **EP 1 912 314 B1**
(45) Date de publication et mention de la délivrance du brevet: **27.07.2011**
(21) Numéro de dépôt: 07360046.2
(22) Date de dépôt: 05.10.2007
(51) Int. Cl.: H02K 7/116, H02K 11/00

(54) **Dispositif de motorisation et son utilisation**
Antriebsvorrichtung und derartige Verwendung
Drive arrangement and method of using such a device

(30) Priorité: 13.10.2006 FR 0609013
(43) Date de publication de la demande: 16.04.2008
(73) Titulaire: MANTION S.A., 25006 Besancon (FR)
(72) Inventeur: Schnoebelen, Denis, 25006 Besançon (FR)
(74) Mandataire: Munier, Laurent

(56) Documents cités:
- EP-A1- 0 328 053
- WO-A-01/59915
- WO-A-01/77479
- WO-A-03/019751
- WO-A-03/098780
- DE-A1- 4 337 390
- DE-A1- 19 916 958
- US-A1- 2003 015 301
- US-A1- 2004 012 279
- US-A1- 2005 211 391

## Description

L'invention s'inscrit dans le domaine des équipements électriques et électroniques appliqués à des mécanismes pour leur motorisation et leur programmation. Plus précisément l'invention concerne la motorisation et l'automatisation de panneaux coulissants tels que volets coulissants par exemple.

En premier lieu, l'invention a pour objet un dispositif de motorisation.

L'art actuel propose des kits de motorisations à des professionnels avertis, installateurs ou fabricants de panneaux coulissants. Ils sont distribués en direct ou via des quincailliers grossistes aux fabricants de panneaux coulissants et/ou aux installateurs de tels panneaux.

Le kit est composé de modules distincts rarement rassemblés parce que destinés à être installés en divers endroits d'une construction. Chaque module comporte de multiples accessoires de fixation en général. Les modules se déclinent chacun en autant de produits qu'il y a de particularités d'applications.

L'homme du métier connaît un moteur, un réducteur, les alimentations via un transformateur et, le cas échéant, un dispositif de sécurité de fins de courses ou de régulation de la distance parcourue.

Aucune autre opération n'est proposée à l'utilisateur que celle de commander l'ouverture ou la fermeture des volets. En cas d'incident, seule une maintenance réparation par un professionnel est possible.

La mise en oeuvre des modules est différenciée en terme de support, certains se trouvant à l'extérieur du bâtiment, d'autres à l'intérieur. Des niches ou réservations dans les supports sont nécessaires pour accueillir certains éléments du dispositif de motorisation.

Ces kits ou modules de motorisation ne sont pas à la portée du grand public, ni chez les quincailliers grossistes, ni dans les rayons de grandes surfaces de vente et de bricolage.

L'installation, la mise en route, le dépannage et la maintenance oblige de faire appel à des professionnels qualifiés pour ces kits. L'utilisateur n'a aucune intervention sur le système sauf la commande de l'ouverture et de la fermeture du panneau avec les moyens moteurs ou la manipulation des panneaux coulissants quand il y a défaillance.

En effet, le kit comporte trop de pièces accessoires au dispositif. Leur mise en oeuvre est complexe et délicate tout autant que le choix des bons modules adaptés aux besoins de l'application et de leur combinaison.

Les modules sont encombrants et ne peuvent pas souvent être dissimulés dans les structures supports du panneau coulissant. A cet effet, des niches dans le support de l'ouvrage du bâtiment et/ou des capotages enjoliveurs étaient nécessaires pour dissimuler des modules.

Les kits souvent exposés aux intempéries souffrent particulièrement des chaleurs torrides et de l'humidité. Les pannes peuvent être répétitives ou fréquentes et variées.

L'absence de maintenance préventive ou curative est due à l'absence de signal de prévention. La panne ou dysfonctionnement restent les seuls indicateurs.

Les kits ne proposent aucun service de confort ou de sécurité des biens et des personnes. A part les fins de courses ou les ruptures de circuits en cas de blocage du déplacement du panneau.

Les défauts d'alimentation ne sont pas relayés par des dispositifs de secours ou de relais sur d'autres sources autonomes.

Du fait de la taille, du poids, des courses de panneaux coulissants, les moteurs basse tension étaient pour le moins alimentés en 12 volts. Les kits ou dispositifs n'en sont que plus chers encore si on exige des dispositifs de bonne qualité.

Les dispositifs n'ont pas forcément pour origine un même fabricant. La construction de ces dispositifs reste onéreuse et ne fait que renchérir l'équipement de panneaux coulissants avec ces dispositifs.

Les erreurs et pannes sont fréquentes et mettent en cause les intervenants dans leur responsabilité civile, professionnelle et de produit. Les garanties fabricant et légales ne peuvent pas contenir des clauses limitatives suffisantes pour protéger les intervenants des appels en garantie et en responsabilité.

Par le document DE 4 337 390 A1 qui s'applique aux automobiles, on connaît un module de motorisation compact autonome et de taille réduite pour s'escamoter dans les structures fixes d'un système d'au moins un panneau coulissant, ledit module comportant à la fois un module moteur alimenté en basse tension, un module boîtier de transmission standard et un module boîtier de regroupement des dispositifs standards d'alimentations secteur et de secours, des dispositifs mécaniques, électriques et/ou électroniques de commande, de gestion, de pilotage, lesdits modules interconnectés et inter solidarisés pour former une unique unité.

Cependant, ce document ne prévoit pas des kits ou des modules destinés à résister aux intempéries et à éviter les pannes dues aux chaleurs torrides et à l'humidité qui provoquent des pannes des circuits électriques.

L'objectif de l'invention est de résoudre les problèmes et inconvénients précités en proposant un ensemble modulaire de motorisation pré assemblé compact à l'usage de tout public et permettant d'être acquis sur des rayons de grandes surfaces de vente et de grandes surfaces de bricolage. L'ensemble modulaire tout comme chacun des modules est étanche, inviolable. Les interconnexions se font par câbles sertis dans les boîtiers de chaque module avec des connecteurs à détrompeur pour garantir toute erreur de connexion.

Les problèmes techniques ci-dessus sont résolus par un module de motorisation dans lequel ladite unique unité étant un ensemble modulaire bénéficiant d'un seul et unique dispositif de liaison et de fixation à la structure fixe du système de panneau coulissant, le moteur étant alimenté en basse tension six volts ; l'ensemble modulaire comporte un bloc dont les modules moteurs et boîtier de regroupement sont réversibles et interchangeables par rapport à un module intermédiaire de référence que constitue le module de transmission et que les assise des modules moteurs et boîtier de regroupement sont de conformation identique et que les sièges du module de transmission sont la reproduction énantiomorphe et inverse parfaite des assises comportant tous des moyens de positionnement, d'indexation et de fixation afin de réaliser une emboîtement étanche des assises sur les sièges solide, durable, sans risque d'erreurs.

Des modules selon l'objectif de l'invention seront standards, interchangeables.

Pour améliorer et faciliter leur intégration dans les supports et structures des systèmes de volets coulissants, les modules pourront être permutés ou rendus réversibles.

Un module concentrera les dispositifs relatifs aux alimentations secteur et secours en basse tension, les dispositifs de commande au choix par bouton, par fil, par ondes ou à distance par téléphone, etc. et les dispositifs de pilotage, de contrôle et de gestion des moyens moteurs, de tout moyen présent dans ces modules.

L'objectif de l'invention est de proposer à l'utilisateur d'installer sans risque un ensemble modulaire compact de motorisation, de le mettre en route en initialisant le système, de recevoir en retour des informations préventives ou de panne, des automatismes de sécurité composants du système de volet coulissant ainsi motorisé, de sécurité des biens avec des échecs aux tentatives d'effraction, de sécurité des personnes, anti-pincement et autres.

L'objectif de l'invention est d'assurer aisément la maintenance ou, la réparation en remplaçant les modules interchangeables défaillants rapidement et aisément.

Le but de l'invention et en référence à ces objectifs est de concevoir un ensemble modulaire compact à modules interchangeables et/ou réversibles. De concevoir chacun de modules étanches et inviolables, leur liaison et alimentation sécurisées sans risque et erreur. D'assurer un autocontrôle des modules par des modules, un pilotage utilisateur et usine pour les automatismes, une mémorisation et gestion des paramètres et des données échangées. Le tout devant pouvoir fonctionner de manière autonome via une alimentation de réserve de secours et/ou via des panneaux solaires. A cet effet et pour ces raisons, le tout sera sous alimentation basse tension 6 volts à courant continu permettant l'utilisation de composants à faible consommation d'un moteur 6 volts, jamais appliqué pour ces usages de volets coulissants.

A ces seules conditions, l'invention remplit le but de la compacité.

Les avantages inhérents à l'invention sont:
- Le coût de fabrication réduit des modules standards réduisant les accessoires de montage et d'interconnexion,
- La réduction des risques d'appels en garantie et en responsabilité civile du produit,
- Un ensemble modulaire compact se prêtant à toutes les applications de panneaux coulissants quels que soient leur taille, poids, longueur des courses d'une part et d'autre part à la portée de tout public par un choix aisé sur des rayons publics, sa facilité d'installation, de mise en route et d'entretien, son fonctionnement anti fausse manoeuvre.
- Les services automatiques de sécurité et d'alimentation, des opérations, des automatismes de protection des biens et des personnes et du matériel de l'ensemble lui-même.

L'invention a encore pour objet l'utilisation parmi d'autres applications d'un ensemble de motorisation compact telle que décrite ci-dessus pour l'actionnement des panneaux coulissants.

L'invention sera mieux comprise à la lecture de la description d'un exemple non limitatif des dessins annexés dans lesquels :
- La figure 1 est une vue en perspective d'un ensemble compact modulaire de motorisation,

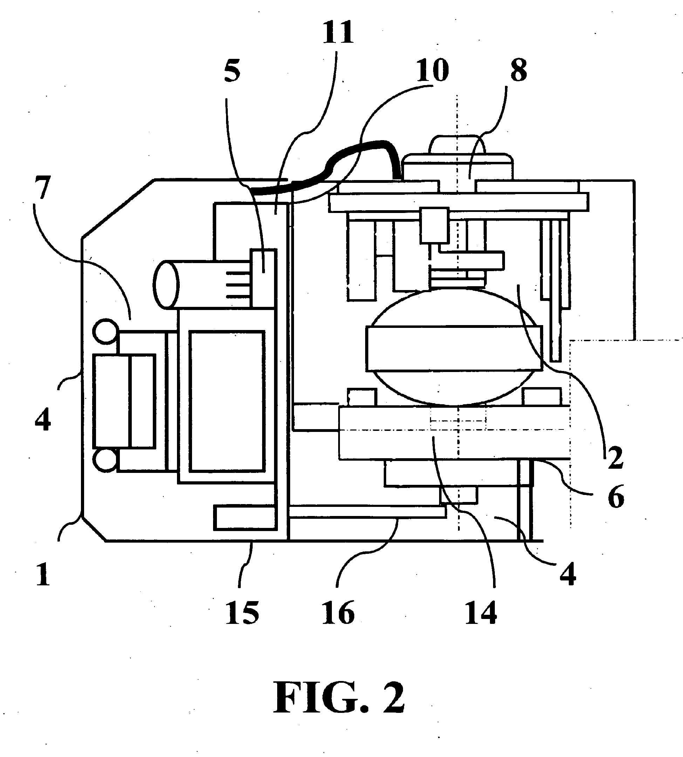

- La figure 2 est une vue en perspective écorchée d'un ensemble modulaire de motorisation selon la Fig. 1.

Sur les figures, l'invention conçoit et réalise un ensemble modulaire compact 8 de motorisation d'au moins un panneau coulissant comprenant un moteur 2 alimenté en basse tension via un boîtier d'alimentation 5 et de transformation de la tension réseau en basse tension dont l'actionnement dudit moteur 2 est répercuté sur une poulie de transmission 3 via un boîtier de transmission 4 et de réduction / amplification du couple moteur, lequel boîtier 4 est solidaire amovible ou inamovible du moteur 2 et comporte un moyen fixe inamovible 6 de liaison à un support fixe.

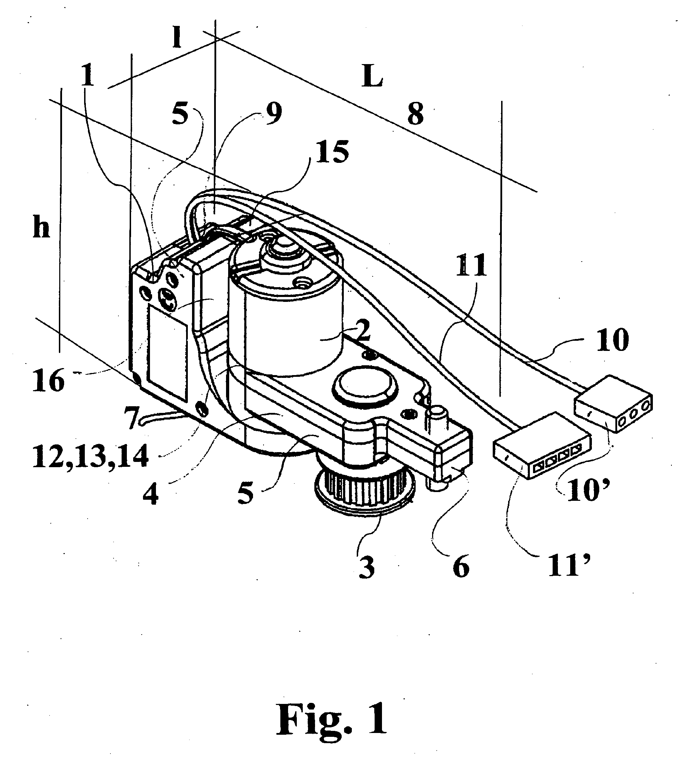

La figure 1 est un mode d'exécution parmi d'autres d'un ensemble modulaire 1 de motorisation d'au moins un panneau mobile comportant trois modules 7 assemblés et interconnectés formant un ensemble modulaire compact 8 de dimensions réduites pour réaliser une motorisation performante, endurante et fiable.

Les interconnexions 9, tout comme les connexions extérieures 10, 11, sont serties dans les boîtiers des modules 7 et comportent des connecteurs 10', 11' comportant des moyens de détrompage évitant toute erreur de branchement. L'ensemble modulaire de motorisation 8 ne fait q'un seul bloc 8 de sorte que la fixation de ce bloc 8 à un support fixe est réalisée avec un unique dispositif de fixation 6 sur un support fixe solidarisant le bloc 8 et ses modules 7 d'un seul tenant à la structure fixe formant support au panneau coulissant. Dans une autre application non représentée ici, ce support fixe du panneau coulissant peut être un profilé tubulaire dont la section transversale du rail est de dimension sensiblement égale à la section transversale du dispositif de fixation 6.

Ledit module de motorisation 1 est un ensemble modulaire 8 compact autonome et de taille réduite pour s'escamoter dans les structures fixes d'un système d'au moins un panneau coulissant, ledit module 1 comportant à la fois un module 7 moteur 2 alimenté en basse tension 6 volts, un module 7 boîtier de transmission 4 standard et un module 7 boîtier de regroupement 5 des dispositifs standards d'alimentations secteur et de secours, des dispositifs mécaniques, électriques et/ou électroniques de commande, de gestion, de pilotage, lesdits modules interconnectés et inter solidarisés pour former une unique unité bénéficiant d'un seul et unique dispositif de liaison et de fixation 6 à la structure fixe du système de panneau coulissant.

Le module 1 comporte, selon le préambule qui précède, les interconnexions 9 et les connexions 10, 11 qui sont réalisées avec des câbles sertis dans les boîtiers des modules 7 et dont les extrémités sont dotées de connecteurs 10', 11' dotés de moyens de détrompage pour des connexions sûres et certaines sans risques.

La figure 1 montre la position de chaque module par rapport à un autre. Ce positionnement est étudié pour obtenir le plus petit volume possible tout en disposant des éléments requis. La fixation de l'ensemble 8 se fait préférentiellement sur des extrémités de profiles formant support fixe du panneau coulissant, le moyen de fixation 6 du bloc 8 ne pouvait que se positionner au mieux près de la poulie 3 et sur le boîtier de transmission 4, laissant toute liberté avec l'autre extrémité du boîtier 4. Cette extrémité reçoit préférentiellement le moteur 2 de sorte que le module 7 du boîtier de regroupement 5 se devait d'être installé sur l'unique emplacement libre disponible du boîtier 4 ; un autre emplacement ne pouvant que gêner la fixation 6 telle qu'envisagée. D'où une structure de boîtier en L qui permet de jouer dans le prolongement d'un rail tubulaire profilé et partant dans le prolongement d'un capot enjoliveur couvrant ledit rail.

Ledit capot enjoliveur pouvant aisément être d'une longueur supérieure à celle du rail et suffisante pour coiffer et masquer l'ensemble 8.

L'ensemble 1 selon l'invention comporte les modules 7 du bloc 8 qui sont agencés et assemblés de telle sorte que les dimensions (L, I, h) extérieures de l'ensemble 8 et partant leur volume s'inscrivent dans un volume sensiblement supérieur formé par la largeur et la hauteur de la section d'un rail tubulaire profilé formant structure fixe ainsi que par la longueur constituée par celle de l'excédant de l'aile du capot enjoliveur dépassant l'extrémité dudit profilé.

Le mode préférentiel de réalisation de l'ensemble 1 est caractérisé par la position centrale ou intermédiaire conférée au boîtier de transmission 7. Il est en effet dans le prolongement de la partie sensiblement médiane de la section du profilé de sorte que la poulie 3 correspond au niveau des montures à galet du volet coulissant. Pour pouvoir utiliser l'ensemble 8 apte à s'appliquer à toutes sortes de situations et plus particulièrement lorsque le moteur 2 devient trop encombrant et ne permet plus la fixation profile fixe avec le moyen 6 de l'ensemble 1, la solution retenue est de rendre les modules 2 moteurs et boîtier de regroupement 5 réversibles. A cet effet, les assises respectives 12 du module moteur 2 et 13 du module boîtier de regroupement 5 sont conformées de manière identique et comportent des moyens de positionnement, d'indexation et de fixation desdits modules 2 et 5 sur des sièges 14 réalisés dans les parois 15 et 16 du boîtier de transmission 4. Ces sièges 14 sont des moyens de positionnement, d'indexation et de fixation desdites assises 12 et 13. Ce faisant, il n'y a aucun risque d'erreur d'assemblage par emboîtement. Avantageusement, cette propriété de rendre les modules 2 et 5 réversibles permet d'envisager l'interchangeabilité de tout ou partie des modules avec d'autres modules identiques ou différents. Avantageusement, l'invention réalise une structure d'ensemble standard aux composants interchangeables et réversibles pour s'adapter à toutes les applications et à toutes les situations telles que pannes et autres.

Le module 1 de l'invention comporte un bloc 8 dont les modules moteurs 2 et boîtier de regroupement 5 sont réversibles et interchangeables par rapport à un module intermédiaire de référence que constitue le module de transmission 4 et que les assise 12 et 14 des modules moteurs 2 et boîtier de regroupement 5 sont de conformation identique et que les sièges 14 du module de transmission 4 sont la reproduction énantiomorphe et inverse parfaite des assises 12 et 13 comportant tous des moyens de positionnement, d'indexation et de fixation afin de réaliser un emboîtement des assises 12, 13 sur les sièges 14 solides, durables, étanches, sans risque d'erreurs.

Pour être plus universel encore dans les applications et réduire les coûts inutiles de stockage d'unités ou modules de référence de transmission 4, l'invention a conçu le moyen de liaison 6 interchangeable. A cet effet, les coques 15, 16 du boîtier 4 comportant sur le côté situé au droit de l'élément de liaison 6 une ouverture conformée pour réaliser une mâchoire dans laquelle s'inscrit une extrémité de l'élément de liaison 6.

Cette extrémité comporte des moyens de positionnement, d'indexation et de fixation correspondant à des moyens identiques réciproques situés sur les mâchoires. Avantageusement, il devient moins coûteux de répondre à tout mode de fixation requis par les diverses applications, tout en gardant un ensemble 8 standard.

L'ensemble 1 comporte la liaison 6 qui est interchangeable et qui comporte à l'une de ses extrémités des moyens de positionnement, d'indexation et de fixation correspondant à des moyens identiques et réciproques sur des mâchoires que constitue une lumière dudit module réducteur 4, conformée adaptée à l'élément de liaison 6 et réalisée au droit de l'extrémité du moyen de liaison 6, ladite propriété confère à l'ensemble modulaire 8 de motorisation la qualité d'un standard de motorisation.

De par sa localisation sous bandeau enjoliveur, l'ensemble 8 se doit d'être étanche et inviolable.

A cet effet, les modules 7 comportent des boîtiers étanches et inviolables d'une part et d'autre part les assises 12 et 13 assemblées avec les sièges 14 réalisent un emboîtement étanche, performant et endurant.

L'ensemble 8 comporte les boîtiers des modules 7 du bloc 8 qui sont étanches et inviolables, leur assemblage par emboîtement des assises 12 et 13 sur les sièges 14 réalisant une liaison étanche, performante et endurante.

Pour pérenniser l'ensemble 8 et le rendre standard et autonome, le boîtier de regroupement 5 comporte en complément des dispositifs d'alimentation, un sous ensemble de batterie à charge permanente contrôlée et une liaison à une source autonome d'énergie tel que panneau solaire. Selon un second mode de réalisation, le sous ensemble peut être délocalisé et relié à l'ensemble 8 via le conducteur 11.

Afin de permettre un standard complet pour conserver le moteur 2 dans un maximum d'applications, le boîtier de transmission 7 comporte des assises de paliers intermédiaires permettant de réaliser au choix via des roues dentées interchangeables à couronnes uniques ou étagées des transmissions directes du palier moteur au palier poulie 3 ou indirectes via des engrenages intermédiaires. Ces transmissions sont optimisées par l'utilisation de roues dentées étagées qui permettent une transmission performante et durable à trains parallèles, dans les cas où les charges de l'application requièrent des efforts soutenus plus élevés.

L'ensemble 8 comporte le dispositif d'alimentation de secours du module de regroupement 5 qui comporte des batteries rechargeables 6 volts sous charge contrôlée permanente, alimentées par secteur et/ou panneaux solaires via le câble de liaison 11, ledit dispositif pouvant être délocalisé du module 5 via le câble de liaison 11.

L'ensemble 8 comporte le module de transmission 4 standard qui comporte des sièges de paliers de roues dentées intermédiaires formant un engrenage avec les roues dentées des paliers moteur 2 et poulie 3, lesdites roues dentées à plusieurs couronnes étagées ou simples sont interchangeables, autorisent des engrenages à trains parallèles et permettent au choix une prise directe du palier moteur 2 sur le palier poulie 3 ou indirectement avec des roues dentées intermédiaires pour réaliser une transmission performante et endurante.

L'invention a aussi pour objet l'utilisation d'un ensemble modulaire compact 8 conforme à la description ci-dessus entre autres applications pour l'actionnement de volets coulissants.

**Signes de référence**

| | | | |
|---|---|---|---|
| 1. | module de motorisation | | |
| 2. | moteur | | |
| 3. | poulie | | |
| 4. | réducteur / boîtier de transmission | | |
| 5. | boîtier d'alimentation / boîtier de regroupement | | |
| 6. | liaison / nez | | |
| 7. | modules | | |
| 8. | bloc / ensemble modulaire compact | | |
| 9. | interconnexion | | |
| 10. | connexion alimentation réseau | 10' | connecteurs |
| 11. | connexion alimentation secours, relais et liaison | 11' | connecteurs |
| 12. | assise du moteur | | |
| 13. | assise du boîtier de regroupement | | |
| 14. | sièges du réducteur | | |
| 15. | coque | | |
| 16. | coque | | |

Les signes de référence insérés après les caractéristiques techniques mentionnées dans les revendications ont pour seul but de faciliter la compréhension de ces dernières et n'en limitent aucunement la portée.

## Revendications

1. Module de motorisation (1) compact autonome et de taille réduite pour s'escamoter dans les structures fixes d'un système d'au moins un panneau coulissant, ledit module (1) comportant à la fois un module (7) moteur (2) alimenté en basse tension , un module (7) boîtier de transmission (4) standard et un module (7) boîtier de regroupement (5) des dispositifs standards d'alimentations secteur et de secours, des dispositifs mécaniques, électriques et/ou électroniques de commande, de gestion, de pilotage, lesdits modules interconnectés et inter solidarisés pour former une unique unité, **caractérisé en ce que** ladite unique unité étant un ensemble modulaire (8) bénéficiant d'un seul et unique dispositif de liaison et de fixation (6) à la structure fixe du système de panneau coulissant, le moteur (2) étant alimenté en basse tension six volts ; l'ensemble modulaire comporte un bloc (8) dont les modules moteurs (2) et boîtier de regroupement (5) sont réversibles et interchangeables par rapport à un module intermédiaire de référence que constitue le module de transmission (4) et que les assises (12, 13) des modules moteurs (2) et boîtier de regroupement (5) sont de conformation identique et que les sièges (14) du module de transmission (4) sont la reproduction énantiomorphe et inverse parfaite des assises (12, 13) des modules moteur (2) et boîtier de regroupement (5), lesdits sièges (14) comportant tous des moyens de positionnement, d'indexation et de fixation afin de réaliser un emboîtement étanche des assises (12, 13) sur les sièges (14) solide, durable, , sans risque d'erreurs.

2. Ensemble modulaire (1) selon la revendication 1, **caractérisé en ce qu'**il comporte les interconnexions (9) et les connexions (10, 11) qui sont réalisées avec des câbles sertis dans les boîtiers des modules (7) et dont les extrémités sont dotées de connecteurs (10', 11') dotés de moyens de détrompage pour des connexions sures et certaines sans risques.

3. Ensemble modulaire (1) selon l'une quelconque des revendications précédentes, **caractérisé en ce qu'**il comporte les modules (7) du bloc (8) qui sont agencés et assemblés de telle sorte que les dimensions (L, l, h) extérieures de l'ensemble (8) et partant leur volume s'inscrivent dans un volume sensiblement supérieur formé par la largeur et la hauteur de la section d'un rail tubulaire profilé formant structure fixe ainsi que par la longueur constituée par celle de l'excédant de l'aile du capot enjoliveur dépassant l'extrémité dudit profilé

4. Ensemble modulaire selon l'une quelconque des revendications précédentes, **caractérisé en ce qu'**il comporte la liaison (6) qui est interchangeable et qui comporte à l'une de ses extrémités des moyens de positionnement, d'indexation et de fixation correspondant à des moyens identiques et réciproques sur des mâchoires.

5. Ensemble modulaire selon la revendication précédente, les mâchoires étant constituées par une lumière dudit module réducteur (4), conformée adaptée à l'élément de liaison (6) et réalisée au droit de l'extrémité du moyen de liaison (6), ladite propriété confère à l'ensemble modulaire de motorisation la qualité d'un standard de motorisation.

6. Ensemble modulaire selon l'une quelconque des revendications précédentes, **caractérisé en ce qu'**il comporte les boîtiers des modules (7) du bloc (8) qui sont étanches et inviolables, leur assemblage par emboîtement des assises (12) et (13) sur les sièges (14) réalisant une liaison étanche, performante et endurante.

7. Ensemble modulaire selon l'une quelconque des revendications précédentes, **caractérisé en ce qu'**il comporte le dispositif d'alimentation de secours du module de regroupement (5) qui comporte des batteries rechargeables 6 volts sous charge contrôlée permanente, alimentées par secteur et/ou panneaux solaires via le câble de liaison (11), ledit dispositif pouvant être délocalisé du module (5) via le câble de liaison (11).

8. Ensemble modulaire selon l'une quelconque des revendications précédentes, **caractérisé en ce qu'**il comporte le module de transmission (4) standard qui comporte des sièges de paliers de roues dentées intermédiaires formant un engrenage avec les roues dentées des paliers moteur (2) et poulie (3), lesdites roues dentées à plusieurs couronnes étagées ou simples sont interchangeables, autorisent des engrenages à trains parallèles et permettent au choix une prise directe du palier moteur (2) sur le palier poulie (3) ou indirectement avec des roues dentées intermédiaires pour réaliser une transmission performante et endurante.

9. Utilisation d'un ensemble modulaire compact (8) selon l'une quelconque des revendications précédentes pour la construction dans le domaine du bâtiment, ledit ensemble (8) étant compact autonome et de taille réduite pour s'escamoter des structures fixes d'un système d'au moins un panneau coulissant, typiquement porte ou volet.

10. Utilisation d'un ensemble modulaire compact (8) selon l'une quelconque des revendications 1 à 8 entre autres applications pour l'actionnement de volets coulissants.

11. Utilisation d'un module de motorisation (1) comprenant des modules (7) conforme à l'une quelconque des revendications 1 à 8 pour obtenir une étanchéité lors des emboîtements afin de se prémunir des pannes répétitives dues à l'humidité.

## Claims

1. Drive module (1), compact, autonomous and of small size so that it may be concealed inside the fixed structures of a system of at least one sliding panel, the said module (1) comprising at once a module (7) with a low voltage motor (2), a module (7) with a standard transmission box (4) and a module (7) with a grouping box (5) containing standard main and backup power supply devices, mechanical, electrical and electronic devices for managing and controlling the said modules, interconnected and joined to each other to form a single unit, **characterised in that** the said single unit being a modular unit (8) with one single device (6) for connecting and fastening it to the fixed structure of the sliding panel system, the motor (2) being supplied with 6-voltage low voltage power, the modular unit comprises a block (8) whose motor (2) and grouping box (5) modules are reversible and interchangeable in relation to a reference intermediate module consisting of the transmission module (4) and that the bases (12, 13) of the motor (2) and grouping box (5) modules are of identical conformation and the seats (14) of the transmission module (4) are the perfect enantiomorphic and reverse reproduction of the bases (12, 13) of the motor (2) and grouping box (5) modules, the said seats (14) all including means of positioning, indexing and fastening in order to achieve a tight interlocking of the bases (12, 13) with the seats (14) which is solid, durable and without risk of error.

2. Modular unit (1) according to claim 1, **characterised in that** it includes the interconnections (9) and connections (10, 11), which are made with cables crimped in the casings of the modules (7) and fitted at the ends with connectors (10', 11') featuring foolproofing means to ensure reliable, certain, risk-free connections.

3. Modular unit (1) according to any one of the preceding claims, **characterised in that** it includes the modules (7) of the block (8) which are arranged and assembled so that the external dimensions (L, W, H) of the assembly (8), and therefore their volume, enter into a volume substantially larger formed by the width and height of the section of a tubular profile rail forming a fixed structure as well as by the length constituted by that of the excess of the flange of the rail cover protruding from the end of the said profile.

4. Modular unit according to any one of the preceding claims, **characterised in that** it includes the connection (6) which is interchangeable and which has at one of its ends means of positioning, indexing and fastening corresponding to identical and reciprocal means on jaws.

5. Modular unit according to the preceding claim, the jaws consisting of an opening in the said reduction gear module (4), conformed to fit the connecting piece (6) and placed opposite the connecting means (6), the said property conferring upon the modular drive unit the nature of a standard drive.

6. Modular unit according to any one of the preceding claims, **characterised in that** it includes the casings of the modules (7) of the block (8) which are sealed and tamperproof, as their assembly by interlocking the bases (12, 13) and the seats (14) creates a tight, effective and enduring connection.

7. Modular unit according to any one of the preceding claims, **characterised in that** it includes the backup power device for the grouping module (5) which includes rechargeable 6-volt batteries under controlled permanent charge, supplied by the mains and/or solar panels by means of the connection cable (11), the said device being able to be placed outside the module (5) via the connection cable (11).

8. Modular unit according to any one of the preceding claims, **characterised in that** it includes the standard transmission module (4) which includes bearing seats for intermediate gear wheels forming a gear pair with the gear wheels of the motor (2) and pulley (3) bearings, the said gear wheels with several stepped or simple rings being interchangeable, permitting parallel gear trains and allowing the force to be taken according to preference either directly from the motor (2) bearing or indirectly from the intermediate gear wheels to provide an effective and enduring transmission.

9. Use of a compact modular assembly (8) according to any one of the preceding claims for construction purposes in the building field, the said assembly (8) being compact, autonomous and of small size so that it may be concealed inside the fixed structures of a system of at least one sliding panel, typically a door or shutter.

10. Use of a compact modular assembly (8) according to any one of claims 1 to 8 among other applications to operate sliding shutters.

11. Use of a drive module (1) comprising modules (7) in accordance with any one of claims 1 to 8 to obtain a sealed fit between the interlocking parts in order to avoid repetitive breakdowns due to damp.

## Patentansprüche

1. Modul (1) für einen Motorantrieb, das kompakt, in sich abgeschlossen und von verringerter Baugröße ist, um sich versenkt in die feststehenden Aufbauten eines Systems mindestens eines Schiebeflügels einzufügen, wobei das Modul (1) zugleich ein Modul (7) für einen mit Niederspannung versorgten Motor (2), ein Modul (7) für ein Gehäuse für eine standardisierte Kraftübertragung (4) und ein Modul (7) für ein Gehäuse (5) zum Zusammenfassen von standardisierten Vorrichtungen für die Netz- und Notstromversorgung von mechanischen, elektrischen und/oder elektronischen Bedienungs-, Kontroll-, Steuereinrichtungen aufweist, wobei die Module so untereinander verbunden und aneinander angebracht sind, dass sie eine einzelne Einheit bilden, **dadurch gekennzeichnet, dass** die einzelne Einheit eine modulare Anordnung (8) ist, die eine einzige und einzelne Vorrichtung (6) für die Verbindung mit und Befestigung an dem feststehenden Aufbau des Schiebeflügelsystems nutzt, wobei der Motor (2) mit 6 V-Niederspannung versorgt wird; die modulare Anordnung einen Block (8) aufweist, dessen Module für den Motor (2) und für das Gehäuse (5) zum Zusammenfassen reversibel und in Bezug auf ein dazwischen befindliches Bezugsmodul, welches das Modul für die Kraftübertragung (4) darstellt, vertauschbar sind, und die Grundplatten (12, 13) der Module für den Motor (2) und für das Gehäuse (5) zum Zusammenfassen eine identische Formgebung aufweisen, und die Aufnahmen (14) des Moduls für die Kraftübertragung (4) eine genau spiegelbildliche und inverse Reproduktion der Grundplatten (12, 13) der Module für den Motor (2) und für das Gehäuse (5) zum Zusammenfassen sind, wobei alle Aufnahmen (14) Positionierungs-, Indexierungs- und Befestigungseinrichtungen aufweisen, um frei von Fehlerrisiken ein dichtendes Einstecken der Grundplatten (12, 13) auf den Aufnahmen (14) zu erzielen, das fest und dauerhaft ist.

2. Modulare Anordnung (1) nach Anspruch 1, **dadurch gekennzeichnet, dass** sie Zwischenverbindungen (9) und Anschlüsse (10, 11) aufweist, die mit Kabeln ausgeführt sind, welche in den Gehäusen der Module (7) verpresst sind und deren Enden mit Verbindern (10', 11') versehen sind, welche mit Unverwechselbarkeitseinrichtungen für risikofreie sichere und eindeutige Verbindungen versehen sind.

3. Modulare Anordnung (1) nach einem der vorherigen Ansprüche, **dadurch gekennzeichnet, dass** sie die Module (7) des Blocks (8) aufweist, die derart angeordnet und montiert sind, dass sich die äußeren Abmessungen (L, B, H) der Anordnung (8) und mithin ihr Volumen in ein im Wesentlichen größeres Volumen einbeschreiben, welches durch die Breite und die Höhe des Querschnitts einer röhrenförmigen Profilschiene dargestellt wird, die einen feststehenden Aufbau bildet, sowie durch die Länge, die durch den Mehrbetrag der Seite der Zierverblendung entsteht, mit dem diese über das Ende des Profils vorsteht.

4. Modulare Anordnung nach einem der vorherigen Ansprüche, **dadurch gekennzeichnet, dass** sie eine Verbindung (6) aufweist, die vertauschbar ist und die an einem ihrer Enden Positionierungs-, Indexierungs- und Befestigungseinrichtungen aufweist, welche identischen und reziproken Einrichtungen an Haltewangen entsprechen.

5. Modulare Anordnung nach dem vorherigen Anspruch, wobei die Haltewangen aus einer Öffnung des Moduls für ein Untersetzungsgetriebe (4) bestehen, deren Formgebung an das Verbindungselement (6) angepasst ist und die dem Ende der Verbindungseinrichtung (6) gegenüberliegend ausgeführt ist, wobei diese Beschaffenheit der modularen Anordnung für einen Motorantrieb die Eigenschaft eines standardisierten Motorantriebs verleiht.

6. Modulare Anordnung nach einem der vorherigen Ansprüche, **dadurch gekennzeichnet, dass** sie Gehäuse der Module (7) des Blocks (8) aufweist, die dicht und eingriffsicher sind und deren Montage mittels Einstecken der Grundplatten (12) und (13) auf den Aufnahmen (14) eine dichtende, leistungsfähige und dauerhafte Verbindung verwirklicht.

7. Modulare Anordnung nach einem der vorherigen Ansprüche, **dadurch gekennzeichnet, dass** sie eine Vorrichtung für die Notversorgung des Moduls zum Zusammenfassen (5) aufweist, welche wiederaufladbare 6 V-Batterien unter permanenter kontrollierter Aufladung aufweist, die über das Verbindungskabel (11) vom Stromnetz und/oder Solarzellenpanelen gespeist werden, wobei die Vorrichtung dank des Verbindungskabels (11) von dem Modul (5) beabstandet aufgestellt werden kann.

8. Modulare Anordnung nach einem der vorherigen Ansprüche, **dadurch gekennzeichnet, dass** sie ein standardisiertes Modul für die Kraftübertragung (4) mit Aufnahmen für Lager von Zwischenzahnrädern aufweist, welche mit den Zahnrädern der Lager des Motors (2) und der Antriebsscheibe (3) ein Zahnradgetriebe bilden, wobei die Zahnräder, welche mehrere abgestufte oder einfache Zahnkränze aufweisen, vertauschbar sind, Zahnradgetriebe mit parallelen Strängen ermöglichen, und wahlweise einen Direkteingriff des Lagers des Motors (2) an dem Lager der Antriebsscheibe (3) oder indirekt mit Zwischenzahnrädern ermöglichen, um eine leistungsfähige und dauerhafte Kraftübertragung zu verwirklichen.

9. Verwendung einer kompakten modularen Anordnung (8) nach einem der vorherigen Ansprüche für die Ausführung im Bauwesen, wobei die Anordnung (8) kompakt, in sich abgeschlossen und von verringerter Baugröße ist, um sich versenkt in feststehende Aufbauten eines Systems mindestens eines Schiebeflügels, üblicherweise einer Schiebetür oder eines Schiebeladens, einzufügen.

10. Verwendung einer kompakten modularen Anordnung (8) nach einem der Ansprüche 1 bis 8 neben anderen Anwendungen für die Betätigung von Schiebeläden.

11. Verwendung eines Moduls (1) für einen Motorantrieb, welches Module (7) nach einem der Ansprüche 1 bis 8 aufweist, um zur Vermeidung von wiederholten feuchtigkeitsbedingten Defekten Dichtigkeit bei Steckverbindungen zu erzielen.
